# EUROPÄISCHE PATENTSCHRIFT

(11) **EP 1 456 077 B1**
(45) Veröffentlichungstag und Bekanntmachung des Hinweises auf die Patenterteilung: **28.01.2009**
(21) Anmeldenummer: 02796658.9
(22) Anmeldetag: 17.12.2002
(51) Int. Cl.: B62D 29/04

(54) **ELEMENTE ZUR GLEITFÄHIGEN BEFESTIGUNG VON BAUTEILEN**
ELEMENTS FOR FIXING COMPONENTS SUCH AS TO BE ABLE TO SLIDE
ELEMENT POUR FIXER DES PIECES EN LEUR PERMETTANT DE COULISSER

(30) Priorität: 18.12.2001 DE 20120423 U
(43) Veröffentlichungstag der Anmeldung: 15.09.2004
(73) Patentinhaber: REHAU AG + Co, 95111 Rehau (DE)
(72) Erfinder: LUX, Stefan, 95182 Döhlau (DE); HERRMANN, Stefan, 95111 Rehau (DE); HOFFMANN, Thomas, 08525 Plauen (DE)
(86) Internationale Anmeldenummer: PCT/EP2002/014401
(87) Internationale Veröffentlichungsnummer: WO 2003/051705

(56) Entgegenhaltungen:
- EP-A- 0 799 758
- DE-A- 10 022 360
- FR-A- 2 806 133

## Beschreibung

Die Erfindung betrifft Elemente zur gleitfähigen Befestigung von Bauteilen.

Zur Befestigung von Karosserieelementen aus Kunststoff sind wegen der größeren Längenausdehnung im Vergleich zu Karosserieelementen aus Stahl spezielle Befestigungselemente bzw. die Kombination spezieller Befestigungselemente erforderlich.

Betrachtet man beispielsweise die Befestigung von Kunststoff-Kotflügeln, sind vor allem im Bereich des Übergangs zu den Türen starre Befestigungen, im Übergang zur Motorhaube und im Bereich des Frontends gleitfähige Befestigungselemente erforderlich, um die geforderte Maßhaltigkeit und die Öffnungs- bzw. Schließfunktionen von Türen und Hauben sicherzustellen.

Bei der Montage am Fahrzeug ist es gerade bei gleitfähigen Befestigungen entscheiden, dass das Bauteil exakt in Nennlage montiert wird. Bei später auftretenden Lageänderungen des Bauteils, z. B. durch Temperaturveränderungen, müssen die zwischen Bauteil und Befestigungselement vorgesehenen Bewegungsräume auch tatsächlich vorhanden sein. Eine Montage außerhalb der Nennlage schränkt die vorgesehene Bewegungsfreiheit des Bauteils entsprechend ein.

Der Stand der Technik kennt dazu eine Reihe von konstruktiven Lösungen.

Aus der FR 2 806 133 A1 (siehe Oberbegriff des Anspruchs 1) ist ein Befestigungselement bekannt, das in eine Montageausnehmung eines Kotflügels einrastbar und in dieser Montageausnehmung verschiebbar ist.

Beispielsweise lehrt EP 0 799 758 (siehe Oberbegriff des Anspruchs 1) die Ausführung eines Befestigungselements aus Kunststoff mit angeformten Lamellenfedem, die vor dem Verschrauben das Gleitelement in Nennlage bringen.

Gemäß US 5 098 765 wird ein Kunststoffelement beschrieben, welches eine gleitfähige Befestigung zulässt. Zum Einstellen der Nennposition besitzt das Element einseitig einen Stift, der bei Montage des zu befestigenden Bauteils an diesem anliegt.

Im vorderen Bereich ist dieser Stift so dünn ausgeführt, dass er bei Kraftbeaufschlagung wegknickt, z. B. durch Wärmeausdehnung des zu befestigenden Bauteiles. Damit wird der Bauraum für die Bewegung des zu befestigenden Bauteiles freigegeben.

Alternativ zu Kunststoffelementen werden auch metallische Passscheiben zur kunststoffgerechten Verschraubung eingesetzt. Diese Passscheiben bestehen aus einer Platte, die in der Mitte einen Durchbruch mit angeformtem Flansch besitzt. Dabei ist die Flanschtiefe geringfügig größer als die Materialstärke des zu befestigenden Bauteiles am Befestigungspunkt.

Diese bekannten Lösungen weisen jedoch eine unzureichende Fixierung der Befestigungselemente in Nennlage auf, d. h. bei der Montage kann es vorkommen, dass bereits bei geringer, unabsichtlicher Krafteinwirkung die Verschraubung außerhalb der Nennlage erfolgt. Diese definierte Nennlage muss jedoch unbedingt eingehalten werden, weiterhin müssen Montagetoleranzen in X- und Y-Richtung berücksichtigt werden können. Dies ist bei den Kunststofflösungen nach dem Stand der Technik nur bedingt möglich.

Weiterhin ist nachteilig, dass die üblichen Kunststoffelemente einen relativ großen Bauraum benötigen und dass sie zu kostenintensiv in der Herstellung sind. Bei metallischen Passscheiben ist die Auslegung der Befestigung der Passscheibe im Bauteil bei gleichzeitiger Option der Gleitfähigkeit des Bauteiles im befestigten Zustand problematisch, darüber hinaus kommt ein hoher Montageaufwand dazu.

Aufgabe der vorliegenden Erfindung ist es daher, Befestigungselemente bereitzustellen, welche
- bei Einhaltung der geforderten Montagetoleranzen einen möglichst kleinen Bauraum benötigen
- die Einhaltung der Nennlage während der Montage gewährleisten
- eine einfache Montage des Karosserieelementes erlauben
- ermöglichen, dass das zu befestigende Karosserieelement bei Wärmeausdehnung im Befestigungselement gleiten kann
- korrosionsfest und kostengünstig herstellbar sind.

Erfindungsgemäß konnte die Aufgabe gelöst werden durch ein vorzugsweise im Spritzgussverfahren hergestelltes Befestigungselement aus Kunststoff mit den Merkmalen des Anspruchs 1. Eine montierte Anordnung ist mit Anspruch 6 beschrieben.

Die Vorteile der Erfindung liegen vor allem in der
- Reduzierung der Herstellungskosten im Vergleich zu metallischen Passscheiben bzw. herkömmlichen Kunststoffelementen
- Reduzierung des Montageaufwandes im Vergleich zu metallischen Passscheiben,
- höhere Genauigkeit der Nennlagedefinition
- Realisierung größerer Montagetoleranzen in X- und Y-Richtung
- Möglichkeit, einen kleinen Bauraum im Vergleich zu bestehenden Kunststofflösungen realisieren zu können
- Möglichkeit, Bauteile mit größeren Wanddicken montierten zu können
- Möglichkeit für einen größeren Gleitweg im Vergleich zu metallischen Passscheiben.

In einem Ausführungsbeispiel des erfindungsgemäßen Befestigungselementes wird die Befestigung eines vorderen Kunststoffkotflügels an einem PKW erläutert:

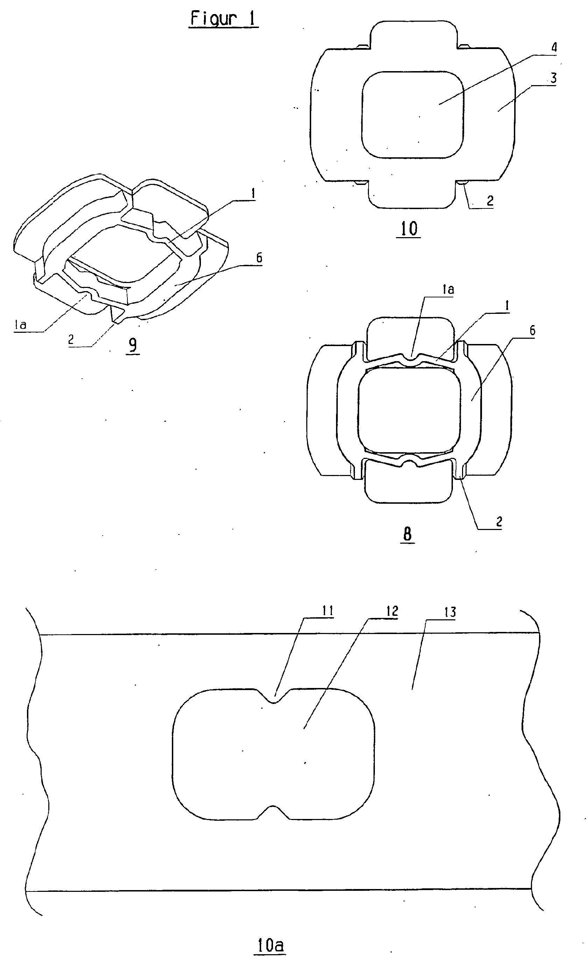

Das Befestigungselement, beschrieben in Figur 1, wird in Z-Richtung in die Montageausnehmung des Kotflügels bis zum Einrasten eingedrückt, so dass der durch die leicht keilförmig ausgebildeten Rastelemente sich ergebende Hinterschnitt das Befestigungselement in der Montageausnehmung des Kotflügels hält.

Im vorliegenden Beispiel dienen die Rastelemente auch gleichzeitig als Führungselemente, welche eine Bewegung des Kotflügels in Y-Richtung weitgehend verhindern. Je nach den konstruktiven Erfordernissen können auch die Rastelemente und die Führungselemente getrennt von einander ausgeführt werden.

Das Befestigungselement wird nun in der Montageausnehmung in X-Richtung so lange verschoben, bis die beiden Federelemente mit ihrer mittigen, keilförmigen Einbuchtung in die beiden korrespondierenden, in der Montageausnehmung des Kotflügels angeformten, keilförmigen Ausbuchtungen eingreifen und so die exakte Einhaltung der Nennlage sicherstellen. Anschließend wird die Bundschraube durch den Durchbruch des flächigen Teiles des Befestigungselementes gesteckt, in die metallische Karosseriestruktur eingeschraubt und mittels Drehmomentschlüssel festgezogen. Der Kotflügel ist nun fest auf der Karosserie fixiert, eine Verschiebung in X-Richtung infolge Wärmedehnungen ist jedoch nach wie vor möglich.

Werkstoffseitig besteht das Befestigungselement aus einem Material, das gleichermaßen über eine hohe Festigkeit und Zähigkeit verfügt.

Liegen die Lackiertemperaturen des Kotflügels im Bereich von 140°C (Online-Lackierung) bis 190 °C (KTL) kommen insbesondere Polyamide, Polyester und darauf basierende Blends infrage. Üblicher Weise erfolgt der Zusatz von Füllstoffen, insbesondere Glasfasern, zusätzlich können Gleitmittel, insbesondere PTFE, MoS2, UHMW-PE oder Kreide zum Einsatz kommen.

Für die sogenannte Offline-Lackierung mit Temperaturen bis ca 100 °C ist in der Regel POM das Material der Wahl, gegebenenfalls ebenfalls mit Zusätzen von Füllstoffen und/oder Gleitmitteln.

Eine erste Ausführungsmöglichkeit der Erfindung beschreibt Figur 1:

Dabei stellen dar: 10 die Ansicht von oben, 9 die dreidimensionale Ansicht von schräg unten, 8 die Ansicht von unten und 10a eine Draufsicht auf ein Karosserieteil. 10 zeigt den flächigen Bereich 3, der als Schraubenauflagefläche für Bundschrauben mit 20 mm Scheibendurchmesser ausgelegt ist, und den Durchbruch 4 im flächigen Teil 3, der den Ausgleich der Montagetoleranzen in zwei Raumrichtungen ermöglicht. Der bei 8 und 9 gut erkennbare, an der Unterseite integrierte ringförmige Bereich 6 verfügt über zwei einander gegenüberliegende Federelemente 1, die jeweils über eine mittig angebrachte, keilförmige Einbuchtung 1 a verfügen.

In diese keilförmige Einbuchtung greift bei der Montage des Befestigungselementes die an das zu befestigende Bauteil 13 im Bereich der Montageausnehmung 12 angeformte Ausbuchtung 11 ein, wodurch die Einhaltung der Nennlageposition gewährleistet ist.

Die Führung in der Montageausnehmung 12 des Kotflügels 13 und die Sicherung gegen Verlust bei der Montage wird durch leicht keilförmig ausgebildete kombinierte Führungs- und Rastelemente 2 erreicht, die in Bezug auf die Montagerichtung einen Hinterschnitt ausbilden und so den zuverlässigen Halt des Befestigungselementes im zu befestigenden Bauteil sicherstellen.

## Patentansprüche

1. Befestigungselement aus einem polymeren Werkstoff zur gleitfähigen Befestigung von einem polymeren Karosserieelement an eine metallische Karosseriestruktur im Kraftfahrzeugbau, das besteht aus:
a. einem flächigen Bereich (3) mit einem im Wesentlichen rechteckigen Durchbruch (4) zur Aufnahme einer in die Karosseriestruktur einschraubbaren Bundschraube,
b. einem in der Unterseite des flächigen Bereichs (3; 31) integrierten, ringförmigen Bereich (6), der verfügt über
i. Rastelemente (2) zum Halten des Befestigungselementes in einer Montageausnehmung (12) des Karosserieelementes (13) in einer Z-Richtung,
ii. Führungselemente (2) zum Verhindern einer Bewegung des Karosserieelementes (13) in einer Y-Richtung, und
iii. mindestens zwei Federelemente (1), die derart ausgebildet sind, dass diese in korrespondierenden Eingriff mit dem Karosserieelement (13) bringbar sind,
**dadurch gekennzeichnet, dass**
c. die mindestens zwei Federelemente (1) jeweils eine mittig angeordnete, keilförmige Einbuchtung (1a) zum korrespondierenden Eingreifen in eine in der Montageausnehmung (12) angeformte, keilförmige Ausbuchtung (11) aufweisen, wobei die Einbuchtungen (1a) derart ausgebildet sind, dass eine Nennlage des Befestigungselementes in einer X-Richtung beim Einbau des Karosserieelementes (13) einhaltbar ist und das Befestigungselement in der Montageausnehmung (12) in der X-Richtung verschiebbar ist.

2. Befestigungselement nach Anspruch 1, **dadurch gekennzeichnet, dass** die mindestens zwei Federelemente (1) derart ausgebildet sind, dass eine thermische Längenausdehnung des Karosserieelementes (13) möglich ist.

3. Befestigungselement nach Anspruch 1 oder 2, **dadurch gekennzeichnet, dass** der polymere Werkstoff ausgewählt ist aus der Gruppe PA, PA-Blend, PBT, PBT-Blend oder POM.

4. Befestigungselement nach Anspruch 3, **dadurch gekennzeichnet, dass** dem polymeren Werkstoff Füllstoffe und/oder Gleitmittel zugesetzt sind.

5. Befestigungselement nach einem der Ansprüche 1 bis 4, **dadurch gekennzeichnet, dass** die Rastelemente (2) auch als Führungselemente ausgebildet sind.

6. Montageanordnung mit
-a- einem polymeren Karosserieelement (13), wobei das Karosserieelement (13) eine Montageausnehmung (12) aufweist, und
-b- einem Befestigungselement aus einem polymeren Werkstoff zur gleitfähigen Befestigung des Karosserieelements (13) an eine metallische Karosseriestruktur im Kraftfahrzeugbau, das besteht aus:
i. einem flächigen Bereich (3) mit einem im wesentlichen rechteckigen Durchbruch (4) zur Aufnahme einer in die Karosseriestruktur einschraubbaren Bundschraube, und
ii. einem in der Unterseite des flächigen Bereichs (3) integrierten, ringförmigen Bereich (6),
-c- wobei der ringförmige Bereich verfügt über:
i. Rastelement (2), die das Befestigungselement in der Montageausnehmung (12) in einer Z-Richtung halten,
ii. Führungselemente (2), die eine Bewegung des Karosserieelements (13) in einer Y-Richtung verhindern, und
iii. mindestens zwei Federelemente (1), die in korrespondierenden Eingriff mit dem Karosserieelement (13) sind,
**dadurch gekennzeichnet, dass**
-d- an das Karosserieelement (13) in der Montageausnehmung (12) keilförmigen Ausbuchtungen (11) angeformt sind, und
-e- die mindestens zwei Federelemente (1) jeweils eine mittig angeordnete, keilförmige Einbuchtung (1a) aufweisen, wobei
i. die Einbuchtungen (1a) in Eingriff mit den Ausbuchtungen (11) sind, und
ii. die Einbuchtungen (1a) derart ausgebildet sind, dass eine Nennlage des Befestigungselementes in einer X-Richtung beim Einbau des Karosserieelementes (13) einhaltbar ist und das Befestigungselement in der Montageausausnehmung (12) in der X-Richtung verschiebbar ist.

## Claims

1. Fastening element composed of a polymeric material for fastening a polymeric vehicle body element such that it can slide on a metallic vehicle body structure in the construction of motor vehicles, comprising:
a) a planar region (3) comprising a substantially rectangular aperture (4) for receiving a collar screw which can be screwed into the vehicle body structure,
b) an annular region (6) which is integrated in the underside of the planar region (3, 31) and has
i. latching elements (2) for holding the fastening element in an assembly recess (12) of the vehicle body element (13) in a Z direction,
ii. guiding elements (2) for preventing the vehicle body element (13) from moving in a Y direction, and
iii. at least two spring elements (1) designed such that they can be brought into corresponding engagement with the vehicle body element (13),
**characterized in that**
c) the at least two spring elements (1) each have a centrally arranged, wedge-shaped indentation (1 a) in order to correspondingly engage in a wedge-shaped bulge (11) integrally formed in the assembly recess (12), wherein the indentations (1a) are designed such that a nominal position of the fastening element can be maintained in an X direction during installation of the vehicle body element (13), and the fastening element can be displaced in the assembly recess (12) in the X direction.

2. Fastening element according to Claim 1, **characterized in that** the at least two spring elements (1) are designed such that a linear thermal expansion of the vehicle body element (13) is possible.

3. Fastening element according to Claim 1 or 2, **characterized in that** the polymeric material is selected from the group consisting of PA, PA blend, PBT, PBT blend or POM.

4. Fastening element according to Claim 3, **characterized in that** fillers and/or lubricants are added to the polymeric material.

5. Fastening element according to one of Claims 1 to 4, **characterized in that** the latching elements (2) are also formed as guiding elements.

6. Assembly arrangement, comprising
a) a polymeric vehicle body element (13), wherein the vehicle body element (13) has an assembly recess (12), and
b) a fastening element composed of a polymeric material for fastening the vehicle body element (13) such that it can slide on a metallic vehicle body structure in the construction of motor vehicles, comprising:
i. a planar region (3) comprising a substantially rectangular aperture (4) for receiving a collar screw which can be screwed into the vehicle body structure, and
ii. an annular region (6) which is integrated in the underside of the planar region (3),
c) wherein the annular region has
i. latching elements (2) which hold the fastening element in the assembly recess (12) in a Z direction,
ii. guiding elements (2) which prevent the vehicle body element (13) from moving in a Y direction, and
iii. at least two spring elements (1), which are in corresponding engagement with the vehicle body element (13),
**characterized in that**
d) wedge-shaped bulges (11) are integrally formed on the vehicle body element (13) in the assembly recess (12), and
e) the at least two spring elements (1) each have a centrally arranged, wedge-shaped indentation (1 a), wherein
i. the indentations (1 a) are in engagement with the bulges (11), and
ii. the indentations (1 a) are formed such that a nominal position of the fastening element (13) can be maintained, and the fastening element can be displaced in the assembly recess (12) in the X direction.

## Revendications

1. Elément de fixation en un matériau polymère pour la fixation glissante d'un élément de carrosserie polymère à une structure de carrosserie métallique dans la construction automobile, qui se compose de:
a) une zone plate (3) présentant une ouverture essentiellement rectangulaire (4) destinée à recevoir une vis d'assemblage à visser dans la structure de carrosserie,
b) une zone annulaire (6), intégrée dans la face inférieure de la zone plate (3, 31), qui comporte
i. des éléments d'encliquetage (2) pour maintenir l'élément de fixation dans un évidement de montage (12) de l'élément de carrosserie (13) dans une direction Z,
ii. des éléments de guidage (2) pour empêcher un mouvement de l'élément de carrosserie (13) dans une direction Y, et
iii. au moins deux éléments de ressort (1), qui sont configurés de façon à pouvoir être amenés en prise correspondante avec l'élément de carrosserie (13),
**caractérisé en ce que**
c) les au moins deux éléments de ressort (1) présentent chaque fois un enfoncement (1 a) en forme de coin disposé au centre pour un engagement correspondant dans un creux (11) en forme de coin, façonné dans l'évidement de montage (12), dans lequel les enfoncements (1 a) sont réalisés de telle manière qu'une position nominale de l'élément de fixation dans une direction X puisse être maintenue lors du montage de l'élément de carrosserie (13) et que l'élément de fixation soit déplaçable dans l'évidement de montage (12) dans la direction X.

2. Elément de fixation selon la revendication 1, **caractérisé en ce que** les au moins deux éléments de ressort (1) sont configurés de telle manière qu'une dilatation thermique longitudinale de l'élément de carrosserie (13) soit possible.

3. Elément de fixation selon la revendication 1 ou 2, **caractérisé en ce que** le matériau polymère est sélectionné dans le groupe PA, mélange de PA, PBT, mélange de PBT ou POM.

4. Elément de fixation selon la revendication 3, **caractérisé en ce que** des matières de charge et/ou des lubrifiants sont ajoutés au matériau polymère.

5. Elément de fixation selon l'une quelconque des revendications 1 à 4, **caractérisé en ce que** les éléments d'encliquetage (2) constituent également des éléments de guidage.

6. Agencement de montage, comportant
a) un élément de carrosserie polymère (13), dans lequel l'élément de carrosserie (13) présente un évidement de montage (12), et
b) un élément de fixation en un matériau polymère pour la fixation glissante de l'élément de carrosserie (13) à une structure de carrosserie métallique dans la construction automobile, qui se compose de:
i. une zone plate (3) présentant une ouverture essentiellement rectangulaire (4) destinée à recevoir une vis d'assemblage à visser dans la structure de carrosserie,
ii. une zone annulaire (6), intégrée dans la face inférieure de la zone plate (3),
c) dans lequel la zone annulaire comprend
i. des éléments d'encliquetage (2), qui maintiennent l'élément de fixation dans l'évidement de montage (12) dans une direction Z,
ii. des éléments de guidage (2), qui empêchent un mouvement de l'élément de carrosserie (13) dans une direction Y, et
iii. au moins deux éléments de ressort (1), qui sont en prise correspondante avec l'élément de carrosserie (13),
**caractérisé en ce que**
d) des creux (11) en forme de coin sont façonnés dans l'évidement de montage (12) sur l'élément de carrosserie (13), et
e) les au moins deux éléments de ressort (1) présentent chaque fois un enfoncement (1 a) en forme de coin disposé au centre, dans lequel
i. les enfoncements (1a) sont en prise avec les creux (11), et
ii. les enfoncements (1a) sont réalisés de telle manière qu'une position nominale de l'élément de fixation (15) puisse être maintenue et que l'élément de fixation soit déplaçable dans l'évidement de montage (12) dans la direction X.
